# EUROPEAN PATENT SPECIFICATION

(11) **EP 1 214 243 B1**
(45) Date of publication and mention of the grant of the patent: **15.11.2006**
(21) Application number: 00964960.9
(22) Date of filing: 11.09.2000
(51) Int. Cl.: B64C 1/18, B64C 1/40, F24D 13/02, B64D 13/08, H05B 3/10

(54) **AIRCRAFT HEATED FLOOR PANEL**
GEHEITZTE FLUGZEUGFUSSBODENPLATTE
PANNEAU DE SOL CHAUFFANT POUR AVION

(30) Priority: 10.09.1999 US 153335 P; 31.08.2000 US 652627
(43) Date of publication of application: 19.06.2002
(73) Proprietor: Goodrich Corporation, Charlotte, North Carolina 28217 (US); Airbus Deutschland GmbH, 21129 Hamburg (DE)
(72) Inventor: GIAMATI, Michael, J., Akron, OH 44312 (US); SCHRAMM, Kevin, C., Strongsville, OH 44136 (US)
(74) Representative: Fennell, Gareth Charles
(86) International application number: PCT/US2000/024874
(87) International publication number: WO 2001/017850

(56) References cited:
- EP-A- 1 046 576
- US-A- 3 697 728
- US-A- 4 291 079
- US-A- 4 598 007
- US-A- 5 851 336
- PATENT ABSTRACTS OF JAPAN vol. 1995, no. 05, 30 June 1995 (1995-06-30) & JP 07 032518 A (DAIRIN SHOJI:KK), 3 February 1995 (1995-02-03)

## Description

This invention relates generally to an aircraft heater floor panel and to methods for making the same.

An aircraft will commonly include a heating system in order to maintain the cabin at a comfortable temperature during flight. The floor of the aircraft is a particular area of concern whereby heater floor panels often are part of an aircraft's heating system. An aircraft heater floor panel typically comprises an electric heater element which heats up when a current is applied by a controller through supply lines. The heater element can comprise resistance wire or an etched foil path arranged in a zig-zag pattern within a dielectric layer of the floor panel.

An aircraft heated floor panel will generally comprise a lower support level, an upper heater level, and a top layer. The lower layer is supported by structural members of the aircraft and has a structural integrity sufficient to support people and objects resting thereon. The upper level incorporates the heating element and thus includes a heat generating layer. Conventionally, the lower support level and the upper heater level have each been built as separate subassemblies in distinct manufacturing processes. (See *e.g.*, U.S. Patent Nos. 3,697,728 and/or 5,851,336 and/on EP 1 046 576). The support level is secured to the aircraft members and then the separately assembled heater level is placed on top of the support panel and then fastened thereto with a fastener, such as a countersunk screw.

The top layer protects the underlying heater level against floor-traffic related damage (*e.g*., punctures from high heels, chips from dropped objects, scratches from dragged luggage, etc.). It is often desirable to have the top layer also function as a heat distributing layer and, to this end, the top layer can comprise a metal sheet, such as an aluminum sheet. However, such metal sheets generally have a different rate of thermal expansion than the underlying layers whereby warping of the metal layer can occur during heating and cooling of the panel.

The present invention provides an aircraft heated floor panel comprising a support level for supporting the panel on structural members of the aircraft, a heater level positioned above the support level for generating heat, and a protective cover layer positioned above the heater level to protect the underlying levels from floor-related damage. The panel is characterized by the support level and the heater level forming a composite structure comprising a series of layers cured together to form the composite structure.

Embodiments of the present invention also provide an aircraft heated floor panel including a heat distribution layer which includes a thermal conductor for distributing a heat pattern generated by a heat generation layer. The thermal conductor is designed to accommodate heat expansion whereby warping problems are minimized. With such a thermal conductor, the protective cover layer of the floor panel need not function as a heat distributor whereby it may be made of a material such as fiberglass.

Embodiments of the present invention further provide an aircraft heater floor panel wherein the protective cover layer is secured to the heater level with an adhesive which retains elasticity after bonding, such as a pressure sensitive adhesive. When an aluminum material is used for the cover layer, this type of adhesive allows such a metal face sheet to expand and contract at a different thermal expansion rate than the support/heater layers. Thus, the protective cover layer can be cured at the same time as the support/heater layers and can also function as a heat distributer.
Figure 1 is a schematic perspective view of an aircraft floor panel 10 according to the present invention installed in an aircraft.
Figure 2 is a schematic diagram of a heating system according to the present invention, the system including the aircraft panel 10.
Figure 3 is a cross-sectional view of a heat generation layer of the floor panel in accordance with the present invention as seen along lines 3-3 of Figure 2.
Figure 4 is a cross-sectional view of the aircraft floor panel 10.
Figure 5 is a top view of a thermal conductor for the floor panel 10.
Figure 6 is a top view of another thermal conductor for the floor panel 10.
Figure 7 is a cross-sectional view of an aircraft panel 110 according to the present invention.
Figure 8 is a cross sectional view of an aircraft panel 210 according to the present invention.
Figures 9A - 9F are schematic views of a method of making the aircraft floor panel 210 according to the present invention.

### DETAILED DESCRIPTION

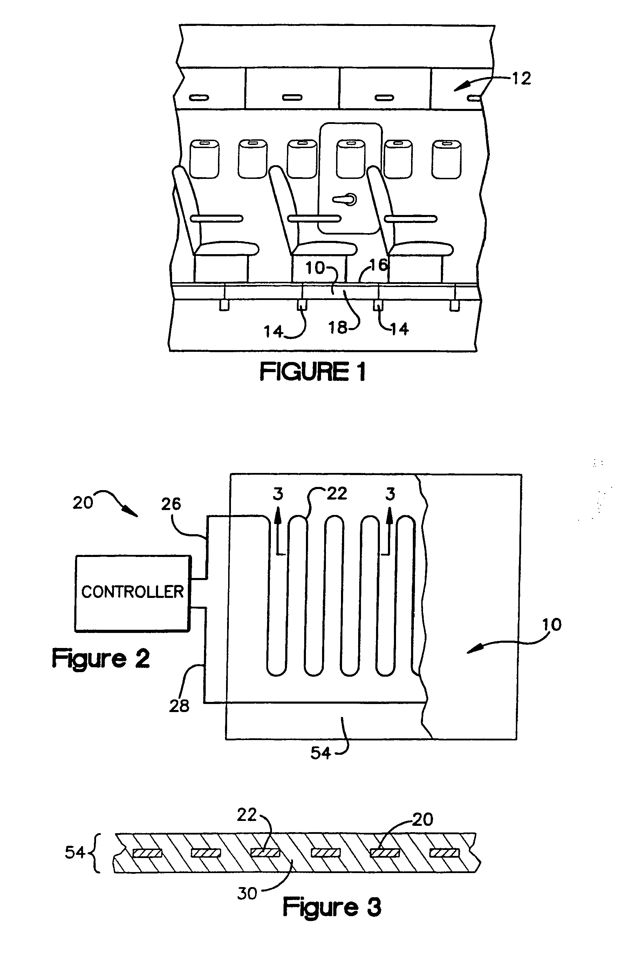

Referring now to the drawings, and initially to Figure 1, a heated aircraft floor panel 10 according to the present invention is shown installed in an aircraft 12. The floor panel 10 is provided in order to maintain the aircraft cabin at a comfortable temperature and is supported around its perimeter by aircraft structure 14. As is explained in more detail below, the floor panel 10 comprises a plurality of layers forming a composite structure 18 and a top layer 16 mounted thereon. The layer 16 protects the underlying structure 18 against floor-traffic related damage (*e*.*g*., punctures from high heels, chips from dropped objects, scratches from dragged luggage, etc.).

As is shown schematically in Figure 2, the floor panel 10 is part of the aircraft's heater system 20 and includes an electrical heater element 22 which heats up when a current is applied by a controller 24 via lines 26 and 28. In the illustrated embodiment, the electric heater element 22 is configured in a zig-zag heat distributing pattern and is encapsulated in a dielectric material 30. The element 22 may be an etched foil type element or a resistance wire element and/or the element may be configured in any other pattern which will distribute generated heat over a large area. Other types of heaters are also possible with and contemplated by the present invention. For example, the heater element 22 could instead be a thermal unit wherein a heated fluid (*e.g*., water, air, etc.) circulates through lines 26 and 28.

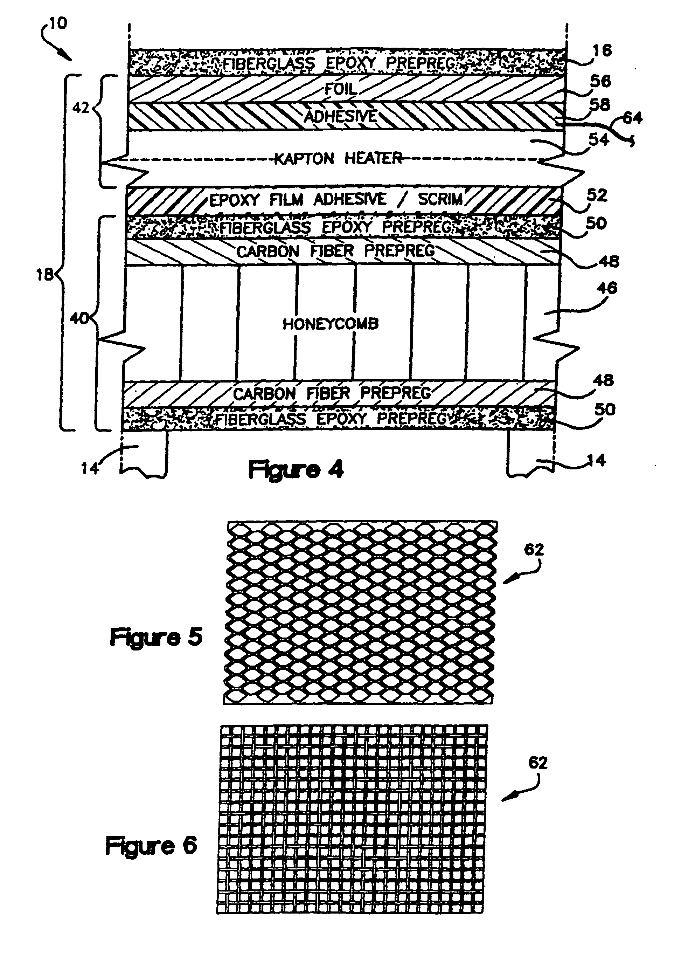

Referring now additionally to Figure 4, the heated aircraft floor panel 10 is shown in detail. The composite structure 18 of the illustrated floor panel 10 comprises a lower support level 40 and an upper heater level 42. The protective layer 16 is mounted on top of the heater level 42 and is made of a protective material (*e.g.,* a fiberglass epoxy prepreg) to improve durability.

The illustrated support level 40 comprises a honeycomb layer 46 sandwiched between first fiber layers 48 and further sandwiched between second fiber layers 50. A suitable honeycomb material is ECA-1/8-7.7(3)-.285 ThK, hexagonal of polyamide paper, phenolic resin bonded, cured, heavy, floor quality, available from Euro-Composites System, although other honeycomb and non-honeycomb materials may also be suitable. The first fiber layers 48 may be formed of carbon fiber prepreg and the second fiber layers 50 may be formed of fiberglass epoxy prepreg. A prepreg is a fiber reinforced polymer composite layer formed of a plurality of filamentary materials in a matrix of thermoset polymeric material. Such materials and their combination into a laminate composite structure are well known in the art.

Other high modulus or high strength fibers such as aramid and the like may be employed alone or in combination with these and other fiber types. In addition to epoxy, other thermoset polymeric materials, such as phenolic, may be employed in these prepregs alone or in combination. Selection of particular materials and a particular construction are predicated upon a number of factors which may include stiffness, overall thickness limitations, and overall weight limitations. Additional and different support layers which provide sufficient stiffness, satisfy thickness limitations and accommodate weight considerations may be used.

An adhesive layer 52 is provided between the support level 40 and the heater level 42 so that the final assembly forms an integral unit or structure. The adhesive may be a film adhesive (*e.g.*, epoxy) and should be capable of withstanding elevated curing temperatures so that during the curing process the adhesive layer 52 provides a good bond between the support level 40 and the heater level 42. A preferable adhesive for layer 52 is an epoxy film adhesive such as PL777 available from Sovereign Engineered Adhesives, L.L.C. However, other adhesives which are compatible for bonding and co-cure with the adjacent layers also are acceptable. The adhesive layer 52 may incorporate a scrim if necessary or desired for better distribution of the adhesive. An example of a suitable scrim material is Reemay 2250.

The heater level 42 includes a heat generation layer 54 which includes the electric heater element 22 encapsulated in the dielectric material 30 (Figures 2 and 3). The element 22 may be isolated by encapsulation in the material 30 by disposing it between plies of an appropriate curable material such as thermoset plastic or any other dielectric or electrically non-conductive material. Suitable dielectrics are well known in the art, and may include such materials as polyamide, epoxies, or other films and plastics, such as Mylar. For example, the plies may be made of a polyamide film, such as Kapton^{®} available from E.I. Dupont DeNeumours Co.

The heater level 42 also includes a heat distribution layer 56 mounted on the heat generation layer 54 with an adhesive layer 58. The heat distribution layer 56 promotes heat transfer into the gaps between the zig-zag lines of the heat distributing pattern of the heater element 22. More particularly, the heat distribution layer 56 spreads the heat from the heat element 22 two-dimensionally across the surface of the floor panel 10 to provide a substantially uniform and homogenous heat distribution pattern. Thus, the heat distribution layer 56 minimizes or eliminates hot and cold spots from occurring on the surface of the floor panel 10 during both the transient mode (e.g., heat-up) and steady state operation of the aircraft's heating system 20 (Figure 2).

The heat distribution layer 56 includes a thermal conductor 62 (Figures 5 and 6) encapsulated in an adhesive. The thermal conductor 62 can be any of a number of materials which are thermally conductive and, preferably, both electrically and thermally conductive so that the heat distribution layer 56 can additionally serve as a grounding plate and as an EMI shield when a grounding lead 64 (Figure 4) is connected thereto. A variety of adhesives can be used to encapsulate the thermal conductor 62, provided that they are compatible with the adjacent layers of the heater panel 10. Resins such as polyester, BMI, and phenolics are suitable and film adhesives such as epoxies are also suitable.

The thermal conductor 62 shown in Figure 5 is an expanded, perforated metal foil, that is a metal foil in which perforations are formed and then slightly expanded to elongate and provide each perforation hole with a greater area. Alternatively, the thermal conductor can be a perforated foil which has not been expanded. Metals such as aluminum and copper are suitable for use for the foil. A suitable expanded metal foil is Astrostrike, AL060, available from Astroseal Products Manufacturing Co., Inc.

Another thermal conductor 62 is shown in Figure 6, this conductor 62 comprising a conductive screen formed from a plurality of conductive fibers which are interwoven, overlapped and/or otherwise arranged in a mesh pattern. The fibers can be conductive metal wires or, alternatively the fibers may be a nonmetal material which is metal coated or metallized, such as a metallized fiberglass. Graphite fabrics and the like may also be used.

The thermal conductor 62 can be any of a number of materials which are thermally conductive and, preferably, both electrically and thermally conductive so that heat distribution layer 56 can provide heat distribution, grounding, and EMI shielding. Additionally or alternatively, the thermal conductor 62 has holes or perforations to promote encapsulation within adjacent plastic, adhesive or composite layers because of the flow of the curable materials through the holes during the curing process. This helps to promote lamination, and/or prevent de-lamination, of the heater panel 10. Heat distribution is believed to be optimized when the conductor has an approximately forty-five percent to approximately sixty-one percent open area.

Although thermal conductors of various constructions are possible with and contemplated by the present invention, it may be noted that expanded metal foils provide additional benefits, such as being light weight (when compared to, for example, solid metals). Also, expanded metal foil tends to easily conform to three dimensional shapes thereby eliminating, or at least minimizing, warping in the final heater panel 10. Furthermore, the curing of the metal foil 62 within the heat distribution layer 56 can be done at the same time as curing the other heater layers thereby eliminating the need for a secondary cure.

To manufacture the heated floor panel 10, the heat generation layer 54 can be preassembled so that it can be tested to assure an acceptable operation range. The layer 54 and the uncured layers 46, 48, 50, 52, 54, 56, and 58 are lay up on a flat cure plate in the sequence shown in Figure 4. Once the panel lay up is completed, the lay up is vacuum bagged and cured in an autoclave. Curing can also be accomplished in a heated press or any other means for applying heat and pressure to the panel assembly. Once the panel assembly is cured, any necessary post-cure steps (final trim, mounting hole drilling, painting, etc.) can be performed. The fiberglass prepreg cover layer 16 may then be mounted on top of the heat distribution layer 56.

The present invention allows a wet lay to be used in the manufacture of the panel 10. A wet lay up is a fiber reinforced polymer composite which cures at room temperature and/or at room atmospheric pressure. A composite is a matrix of dissimilar material layers, where one of such layers generally includes a curable plastic reinforced with a fibrous material.

As noted above, the thermal conductor 62 of the heat distribution layer 56 preferably has holes or perforations and is encapsulated in resin. During the cure process, the resin in adjacent layers flows through and around the holes of the metal foil or screen of the heat distribution layer 56, thereby improving the bond between the thermal conductor 62 and adjacent materials. Furthermore, as also noted above, the perforations or holes in the thermal conductor minimize or eliminate thermal expansion problems during the curing process.

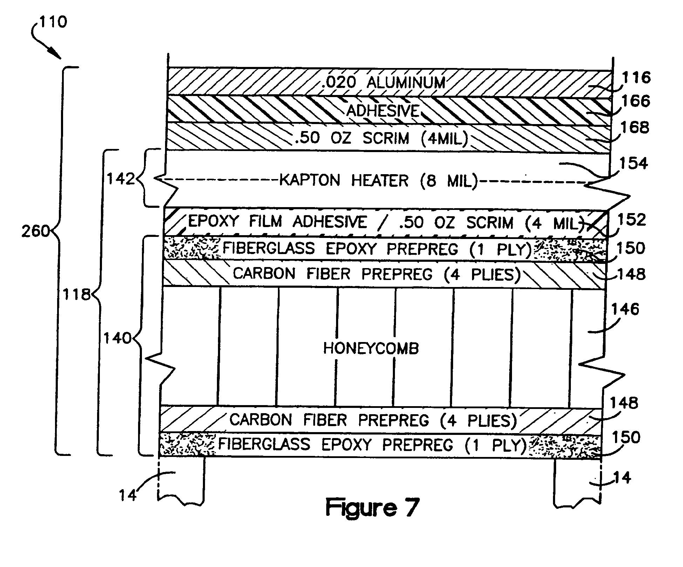

Referring now Figure 7, another heated floor panel 110 according to the present invention is shown in detail. The illustrated floor panel 110 has a lower support level 140, an upper heater level 142, and its protective layer 116 is mounted on top of the heater level 142. The lower support level 142 can be essentially the same as the support level 40 of the floor panel 10 and include a honeycomb layer 146 sandwiched between first fiber layers 148 and further sandwiched between second fiber layers 150.

The upper heater level 142 comprises a heat generation layer 154 which can be essentially the same as the heat generational layer 54 of the floor panel 10 and thus includes the electric heater element 22 encapsulated in the dielectric material 30 (Figures 2 and 3). An adhesive layer 152, which can be essentially the same as the adhesive layer 52, is provided between the support level 140 and the heater level 142.

The heater level 142 of the panel 110 does not include a separate heat distribution layer. Instead, the top layer 116 serves as both a heat distribution layer and a protective layer. To this end, the protective layer 116 is made of a material having suitable thermal conduction properties for heat distribution while at the same time be able to withstand weight, damage, and wear associated with floor-related traffic. The top layer 116 is preferably made of a metal, such as aluminum, titanium, steel or stainless steel. Although the perforated foils and/or screens used for the thermal conductor 62 of the panel 10 could be used for the layer 116, in most instances a solid metal layer will be preferred (despite its increased weight) for improved damage and wear resistance.

An adhesive layer 166 bonds the metal sheet layer 116 to the heater level 142 and a scrim layer 168 may also be provided between the layers 116 and 166. The adhesive layer 166 is comprised of an adhesive which is suitable for bonding adjacent layers together, such as EA9395 available from Hysol Aerospace Adhesives.

Manufacture of the heater panel 110 is similar to the manufacture of the heater panel 10, with the top layer 116 being bonded to the other panel layers in a secondary operation. Specifically, after the composite structure of the support level 140 and the heater level 142 have been assembled, cured, and cooled to room temperature, the adhesive 166 is used to the secure the sheet metal layer 116 to the top of the heater generation layer 154. The secured sheet metal layer 116 can then be cut/trimmed to the correct size and an appropriate surface treatment (e.g., paint, primer, anodizing, etc.) may be applied.

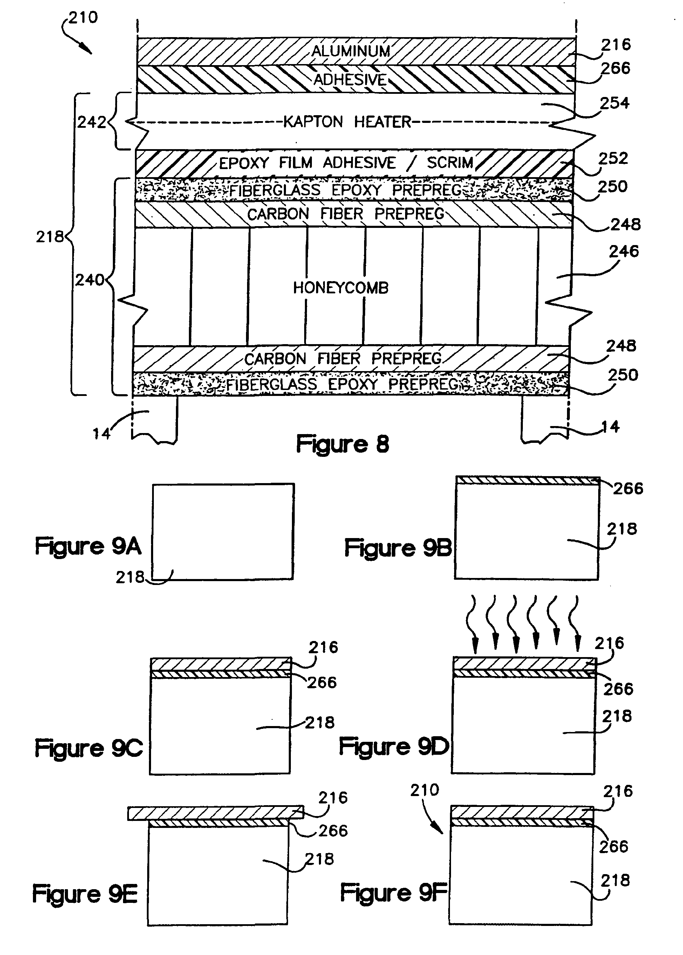

Referring now to Figure 8, another heated floor panel 210 according to the present invention is shown in detail. The illustrated floor panel 210 has a composite structure 218, including a lower support level 240 and an upper heater level 242, with its protective layer 216 being mounted on top of the heater level 242. The lower support level 240 can be essentially the same as the support level 40/140 of the floor panel 10/110 and includes a honeycomb layer 246 sandwiched between first fiber layers 248 and further sandwiched between second fiber layers 250.

The upper heater level 242 comprises a heat generation layer 254 which can be essentially the same as the heat generational layer 54/154 of the floor panel 10/110 and thus includes the electric heater element 22 encapsulated in the dielectric material 30 (Figures 2 and 3). An adhesive layer 252, which can be essentially the same as the adhesive layer 52/152, is provided between the support level 240 and the heater level 242.

The heater level 242 of the panel 210, like the heater level 142 of the panel 110, does not include a separate heat distribution layer and instead its top layer 216 serves as both a heat distribution layer and a protective layer. The top layer 216 is preferably a metal face sheet, and more preferably an aluminum sheet.

An adhesive layer 266 bonds the top layer 216 to the composite structure 218. According to this embodiment of the invention, the adhesive layer 266 is an adhesive which retains elasticity after bonding, specifically a pressure sensitive adhesive (PSA) which is activated by the application of pressure and which performs appropriately during elevated curing temperatures. Suitable pressure sensitive adhesives include acrylic pressure sensitive adhesives (e.g., catalog number F-9473PC available from Minnesota Mining and Manufacturing Company, St. Paul, Minnesota, USA.) Primers may be used to enhance the bonding characteristics of the adhesive.

The design of the floor panel 210 eliminates the need for a separate bonding step for the metal face sheet 216 and/or the need to perform this step at room temperature. With the floor panel 110, for example, this is not possible due to the differences in the thermal expansion rates between the support/heater layers and the metal layer. Specifically, at the high temperatures necessary to cure the support/heater layers, the metal face sheet would expand outwardly at a greater rate than the support/heater layers. If a high temperature film adhesive was used to secure the metal face sheet to the underlying support/heater layers, such an adhesive would lock the metal face sheet in this expanded condition. As the panel was subsequently cooled to room temperature, the bonded metal face sheet would attempt to contract inwardly thereby causing gross warping of the sheet.

A method of making the floor panel 210 according to the present invention is schematically shown in Figures 9A-9F. Initially, the layers 218 of the lower support level 240 and the upper heater level 242 are compiled. (Figure 9A.) The pressure sensitive adhesive layer 266 is then applied to the top surface (Figure 9B) and the metal sheet layer 216 is placed on top of the adhesive layer 266 (Figure 9C). The support/heater layers 218 are then subjected to a curing process at an elevated temperature (*e.g.,* in excess of about 250° F (121.11 °C)) and, at the same time, pressure may be applied to activate the pressure sensitive adhesive layer 266. (Figure 9D.) During the heat curing, the metal sheet layer 216 expands outwardly due to the differences in the thermal expansion rates between the support/heater layers 218 and the metal sheet 216. (Figure 9E.) As the panel 210 is subsequently cooled to room temperature (*e.g.*, heat is removed and the panel is allowed to cool), the bonded metal face sheet 216 contracts inwardly. (Figure 9F.)

Because pressure sensitive adhesives retain elasticity after bonding, the metal sheet layer 216 is allowed to contract inwardly without warping as the panel 210 is cooled to room temperature. Additionally, the thickness of the pressure sensitive adhesive layer 266 may be varied to accommodate different curing temperatures. Generally, the greater the thickness, the higher the curing temperature that may be used. For example, a thickness of 0.010 inch (0.0254 cm) would correspond to a curing temperature of about 280°F (137.78° C).

Additional manufacturing steps can be streamlined as well. For example, the metal sheet layer 216 can be cut to a net shape and treated with the appropriate surface treatment and then bonded to the other layers 218 in one step.

## Claims

1. An aircraft heated floor panel (10/110/210) comprising:
a support level (40/140/240) for supporting the panel on structural members (14) of the aircraft (12);
a heater level (42/142/242) positioned above the support level for generating heat; and
a protective cover layer (16/116/216) positioned above the heater level to protect the underlying levels from floor-related damage;
**characterized by**:
the support level (40/140/240) and the heater level (42/142/242) forming a composite structure (18/118/218) comprising a series of layers cured together to form the composite structure (18/118/218).

2. An aircraft heated floor panel (10) according to claim 1,
wherein the heater level (42) comprises a heat generating layer (54) which generates a heat pattern and a heat distributing layer (56) which distributes the heat.

3. An aircraft heated floor panel (10) according to claim 1 or claim 2, wherein the heat distributing layer (56) comprises a thermal conductor (62).

4. An aircraft heated floor panel (10) according to any preceding claim, wherein the thermal conductor (62) is made from aluminum, copper, graphite, and/or metallized fibers.

5. An aircraft heated floor panel (10) according to any preceding claim, wherein the thermal conductor (62) comprises a metal foil.

6. An aircraft heated floor panel (10) according to any preceding claim wherein the thermal conductor (62) comprises a perforated metal foil.

7. An aircraft heated floor panel (10) according to any preceding claim wherein the thermal conductor (62) comprises an expanded perforated metal foil.

8. An aircraft heated floor panel (10) according to any of claims 3-5, wherein the thermal conductor (62) includes a conductive mesh.

9. An aircraft heated floor panel (10) according to any of claims 3-8, wherein the thermal conductor (62) comprises a plurality of openings forming an open area.

10. An aircraft heated floor panel (10) according to any preceding claim wherein the thermal conductor (62) has approximately forty-five percent to approximately sixty-one percent open area.

11. An aircraft heated floor panel (10) according to any of claims 2-10, wherein the heat distribution layer (56) is bonded to the heat generation layer (54) with an adhesive (58).

12. An aircraft heated floor panel (10) according to any preceding claim, wherein the adhesive (58) is a high temperature curing adhesive.

13. An aircraft heated floor panel (10) according to any of claims 2-12, wherein the heat distribution layer (56) and the heat generation layer (54) are co-curec together.

14. An aircraft heated floor panel (10) according to any of claims 3-13, further comprising an electrical grounding lead (64) connected to the thermal conducto (62).

15. An aircraft heated floor panel (10) according to any of the preceding claims wherein the protective cover layer (16) comprises a fiberglass prepreg layer.

16. An aircraft heated floor panel (110/210) according to claim 1, wherein the protective cover layer (116/216) comprises a metal face sheet.

17. An aircraft heated floor panel (110/210) according to any preceding claim, wherein the metal face sheet (116/216) is made of aluminum, titanium, steel, or stainless steel.

18. An aircraft heated floor panel (110/210) according to any preceding claim, wherein the protective cover layer (116/216) comprises an aluminum face sheet secured to the heater level (142/242) with an adhesive (166/266).

19. An aircraft heated floor panel (210) according to any of claims 1, and 16-18 wherein the protective cover layer (216) is secured to the heater level (242) with an eleastically bonding adhesive (266).

20. An aircraft heated floor panel (210) according to any preceding claim, wherein the elastically bonding adhesive (266) is a pressure sensitive adhesive.

21. An aircraft heated floor panel (210) according to any preceding claim, wherein the pressure sensitive adhesive (266) is an acrylic pressure sensitive adhesive.

22. An aircraft heated floor panel (10/110/210) according to any of the preceding claims wherein the support level comprises includes a honeycomb layer sandwiched between fiber layers.

23. An aircraft heated floor panel (10/110/210) according to any of the preceding claims, wherein the heater level (42/142/242) comprises a resistive element (22) encapsulated in cured thermoset plastic plies.

24. An aircraft heated floor panel (10/110/210) according to any of the preceding claims, further comprising a high temperature curing adhesive layer (52/152/242) between the support level (40/140/240) and the heater level (42/142/242).

25. A method of making the aircraft heated floor panel (10/110/210) of any of the preceding claims, said method comprising the steps of:
compiling a plurality of curable layers together to form the support level (40/140/240) and the heater level (42/142/242);
curing the compiled layers together to form the composite structure (18/118/218).

26. A method according to claim 25 when depending from Claim 2, wherein said compiling step comprises applying an adhesive (58) to the heat generation layer (54) and disposing the heat distribution layer (56) on the adhesive; and wherein said curing step comprises curing the heat generation and heat distribution layers (54, 56) at an elevated curing temperature.

27. A method according to claim 25 or claim 26, wherein said curing step is performed at an elevated curing temperature.

28. A method according to any of claims 25 to 27, further comprising the step of securing a protective cover sheet (116/216) to the heater level (142/242) with an adhesive (166/266).

29. A method according to claim 28, wherein said securing step is performed in a secondary operation.

30. A method according to claim 28, wherein said securing step comprises applying a layer of an elastic-after-bonding adhesive (266) to the top of the heater level (242) and placing the protective cover layer (216) on top of the adhesive layer prior to the curing step and wherein said curing step comprises curing the support/heater layers (240,242) and the protective cover layer (216) together.

31. A method according to any one of claims 25 to 30, wherein the protective cover layer (216) is a metal sheet and wherein the elastic-after bonding adhesive (266) allows the metal face sheet to expand and contract at a different thermal expansion rate than the support/heater layers (240,242) during the curing step and subsequent cooling.

32. A method according to claims 30 or claim 31, wherein the curing temperature is at least about 250° F (121.11°C).

33. A method according to any one of claims 25 to 32, wherein the layer of the pressure sensitive adhesive (266) is about 0.010 inch (0.254 cm) and wherein the curing temperature is about 280° F (137.78°C).

34. A method according to any one of claims 31, 32 or 33, wherein the face sheet is cut to net shape prior to the curing step.

35. A method according to any of claims 31 to 34, wherein a surface treatment is applied to the face sheet prior to the curing step.

36. In combination, an aircraft (12) and an aircraft heated floor panel (10/110/210) according to any of claims 1 to 24 or as made according to the method of any of claims 25 to 35.

## Patentansprüche

1. Geheizte Flugzeugfußbodenplatte (10/110/210) mit:
einer Stützfläche (40/140/240) zum Abstützen der Platte auf Bauteilen (14) des Flugzeuges (12);
einer Heizfläche (42/142/242), die über der Stützfläche für die Erzeugung von Wärme angeordnet ist; und
einer Schutzabdeckschicht (16/116/216), die über der Heizfläche angeordnet ist, um die darunterliegenden Flächen gegen bodenbezogene Beschädigung zu schützen;
**dadurch gekennzeichnet, daß**
die Stützfläche (40/140/240) und die Heizfläche (42/142/242) einen Verbundaufbau (18/118/218) bilden, der eine Reihe von Schichten aufweist, die zusammen ausgehärtet sind, um den Verbundaufbau (18/118/218) zu bilden.

2. Geheizte Flugzeugfußbodenplatte (10) nach Anspruch 1, wobei die Heizfläche (42) eine wärmeerzeugende Schicht (54) aufweist, welche ein Hitzemuster erzeugt, und eine wärmeverteilende Schicht (56) aufweist, welche die Hitze verteilt.

3. Geheizte Flugzeugfußbodenplatte (10) nach Anspruch 1 oder Anspruch 2, wobei die Wärmeverteilungsschicht (56) einen Wärmeleiter (62) aufweist.

4. Geheizte Flugzeugfußbodenplatte (10) nach einem vorhergehenden Anspruch, wobei der Wärmeleiter (62) aus Aluminium, Kupfer, Graphit und/oder metallisierten Fasern hergestellt ist.

5. Geheizte Flugzeugfußbodenplatte (10) nach einem vorhergehenden Anspruch, wobei der Wärmeleiter (62) eine Metallfolie aufweist.

6. Geheizte Flugzeugfußbodenplatte (10) nach einem vorhergehenden Anspruch, wobei der Wärmeleiter (62) eine perforierte Metallfolie aufweist.

7. Geheizte Flugzeugfußbodenplatte (10) nach einem vorhergehenden Anspruch, wobei der Wärmeleiter (62) eine ausgedehnte perforierte Metallfolie aufweist.

8. Geheizte Flugzeugfußbodenplatte (10) nach einem der Ansprüche 3 bis 5, wobei der Wärmeleiter (62) ein leitendes Gitter aufweist.

9. Geheizte Flugzeugfußbodenplatte (10) nach einem der Ansprüche 3 bis 8, wobei der Wärmeleiter (62) eine Vielzahl von Öffnungen aufweist, welche eine offene Fläche bilden.

10. Geheizte Flugzeugfußbodenplatte (10) nach einem vorhergehenden Anspruch, wobei der Wärmeleiter (62) etwa 45% bis etwa 61% offene Fläche hat.

11. Geheizte Flugzeugfußbodenplatte (10) nach einem der Ansprüche 2 bis 10, wobei die Wärmeverteilungsschicht ( 56) mit einem Klebstoff (58) mit der Wärmeerzeugungsschicht (54) verbunden ist.

12. Geheizte Flugzeugfußbodenplatte (10) nach einem vorhergehenden Anspruch, wobei der Klebstoff (58) ein bei hoher Temperatur aushärtender Klebstoff ist.

13. Geheizte Flugzeugfußbodenplatte (10) nach einem der Ansprüche 2 bis 12, wobei die Wärmeverteilungsschicht (56) und die Wärmeerzeugungsschicht (54) zusammen gehärtet sind.

14. Geheizte Flugzeugfußbodenplatte (10) nach einem der Ansprüche 3 bis 13, ferner mit einer elektrischen Erdleitung (64), die mit dem Wärmeleiter (62) verbunden ist.

15. Geheizte Flugzeugfußbodenplatte (10) nach einem der vorhergehenden Ansprüche, wobei die Schutzabdeckschicht (16) eine kunststoffimprägnierte Fiberglasschicht aufweist.

16. Geheizte Flugzeugfußbodenplatte(110/210) nach Anspruch 1, wobei die Schutzabdeckschicht (116/216) eine Metalldeckschicht aufweist.

17. Geheizte Flugzeugfußbodenplatte (110/210) nach einem vorhergehenden Anspruch, wobei die Metalldeckschicht (116/216) aus Aluminium, Titan, Stahl oder nicht-rostendem Stahl hergestellt ist.

18. Geheizte Flugzeugfußbodenplatte (110/210) nach einem vorhergehenden Anspruch, wobei die Schutzabdeckschicht (116/216) eine Aluminiumdeckschicht aufweist, die an der Heizfläche (142/242) mit einem Klebstoff (166/266) angebracht ist.

19. Geheizte Flugzeugfußbodenplatte (210) nach einem der Ansprüche 1 und 16 - 18, wobei die Schutzabdeckschicht (216) mit einem elastisch verbindenden Klebemittel (266) an der Heizfläche (242) angebracht ist.

20. Geheizte Flugzeugfußbodenplatte (210) nach einem vorhergehenden Anspruch, wobei das elastisch verbindende Klebemittel (266) ein drucksensitiver Klebstoff ist.

21. Geheizte Flugzeugfußbodenplatte (210) nach einem vorhergehenden Anspruch, wobei der drucksensitive Klebstoff (266) ein acrylsaurer drucksensitiver Klebstoff ist.

22. Geheizte Flugzeugfußbodenplatte (10/110/210) nach einem der vorhergehenden Ansprüche, wobei die Stützfläche eine zwischen Faserschichten sandwichartig angeordnete Wabenschicht aufweist.

23. Geheizte Flugzeugfußbodenplatte (10/110/210) nach einem der vorhergehenden Ansprüche, wobei die Heizfläche (42/142/242) ein Widerstandselement (22) aufweist, welches in ausgehärteten, heißfixierten Kunststofflagen eingekapselt ist.

24. Geheizte Flugzeugfußbodenplatte (10/110/210) nach einem der vorhergehenden Ansprüche, ferner mit einer bei hoher Temperatur aushärtenden Klebeschicht (51/152/242) zwischen der Stützfläche (40/140/240) und der Heizfläche (42/142/242).

25. Verfahren zum Herstellen einer geheizten Flugzeugfußbodenplatte (10/110/210) nach einem der vorhergehenden Ansprüche, wobei das Verfahren die folgenden Schritte aufweist:
Zusammenstellen einer Vielzahl von aushärtbaren Schichten zur Bildung der Stützfläche (40/140/240) und der Heizfläche (42/142/242);
Zusammenaushärten der zusammengestellten Schichten zur Bildung des Verbundaufbaues (18/118/218).

26. Verfahren nach Anspruch 25 bei Abhängigkeit von Anspruch 2, wobei das Zusammenstellen das Aufbringen eines Klebstoffes (58) auf die Wärmeerzeugungsschicht (54) und das Anordnen der Wärmeverteilungsschicht (56) auf dem Klebstoff aufweist; und wobei das Aushärten das Aushärten der Wärmeerzeugungs- und der Wärmeverteilungsschicht (54, 56) bei einer erhöhten Aushärttemperatur aufweist.

27. Verfahren nach Anspruch 25 oder Anspruch 26, wobei das Aushärten bei einer erhöhten Aushärttemperatur erfolgt.

28. Verfahren nach einem der Ansprüche 25 - 27, ferner mit dem Befestigen einer Schutzabdeckschicht (116/216) an der Heizfläche (142/242) mit einem Klebstoff (166/266).

29. Verfahren nach Anspruch 28, wobei das Anbringen in einem sekundären Arbeitsvorgang erfolgt.

30. Verfahren nach Anspruch 28, wobei das Anbringen das Aufbringen einer Schicht eines nach dem Verbinden elastischen Klebstoffes (266) oben auf die Heizfläche (242) und das Anordnen der Schutzabdeckschicht (216) vor dem Aushärten oben auf die Klebstoffschicht aufweist und das Aushärten das Zusammenaushärten der Stütz-/Heizflächen (240, 242) und der Schutzabdeckschicht (216) aufweist.

31. Verfahren nach einem der Ansprüche 25 - 30, wobei die Schutzabdeckschicht (216) eine Metallschicht ist und der nach dem Verbinden elastische Klebstoff (266) der Metalldeckschicht erlaubt, mit anderer Wärmeausdehnungsrate zu expandieren und zu kontrahieren als die Stütz-/Heizschichten (240, 242) während des Aushärtens und nachfolgenden Kühlens.

32. Verfahren nach Anspruch 30 oder Anspruch 31, wobei die Aushärttemperatur mindestens etwa 250°F (121,11°C) beträgt.

33. Verfahren nach einem der Ansprüche 25 - 32, wobei die Schicht des drucksensitiven Klebstoffes (266) etwa 0,010 Zoll (0,254 cm) beträgt und die Aushärttemperatur etwa 280°F (137,78°C) beträgt.

34. Verfahren nach einem der Ansprüche 31, 32 oder 33, wobei die Deckschicht vor dem Aushärten auf die Reinform geschnitten wird.

35. Verfahren nach einem der Ansprüche 31 bis 34, wobei eine Oberflächenbehandlung vor dem Aushärten auf die Deckschicht aufgebracht wird.

36. In Kombination ein Flugzeug (12) und eine geheizte Flugzeugfußbodenplatte (10/110/210) nach einem der Ansprüche 1 bis 24 oder nach der Herstellung gemäß dem Verfahren nach einem der Ansprüche 25 bis 35.

## Revendications

1. Panneau de plancher chauffé d'aéronef (10/110/210) comprenant :
un étage de support (40/140/240) pour supporter le panneau sur des éléments structurels (14) de l'aéronef (12) ;
un étage de dispositif de chauffage (42/142/242) positionné au-dessus de l'étage de support pour produire de la chaleur ; et
une couche de couverture de protection (16/116/216) positionnée au-dessus de l'étage du dispositif de chauffage pour protéger les étages inférieurs de l'endommagement lié au plancher ;
**caractérisé par** :
l'étage de support (40/140/240) et l'étage du dispositif de chauffage (42/142/242) formant une structure composite (18/118/218) comprenant une série de couches durcies ensemble pour former la structure composite ((18/118/218).

2. Panneau de plancher chauffé d'aéronef (10) selon la revendication 1, dans lequel l'étage de dispositif de chauffage (42) comprend une couche de production de chaleur (54) qui produit une configuration de rayonnement de la chaleur et une couche de distribution de chaleur (56) qui distribue la chaleur.

3. Panneau de plancher chauffé d'aéronef (10) selon la revendication 1 ou la revendication 2, dans lequel la couche de distribution de chaleur (56) comprend un conducteur thermique (62).

4. Panneau de plancher chauffé d'aéronef (10) selon l'une quelconque des revendications précédentes, dans lequel le conducteur thermique (62) est constitué d'aluminium, de cuivre, de graphite et/ou de fibres métallisées.

5. Panneau de plancher chauffé d'aéronef (10) selon l'une quelconque des revendications précédentes, dans lequel le conducteur thermique (62) comprend une feuille métallique.

6. Panneau de plancher chauffé d'aéronef (10) selon l'une quelconque des revendications précédentes, dans lequel le conducteur thermique (62) comprend une feuille métallique perforée.

7. Panneau de plancher chauffé d'aéronef (10) selon l'une quelconque des revendications précédentes, dans lequel le conducteur thermique (62) comprend une feuille métallique perforée dilatée.

8. Panneau de plancher chauffé d'aéronef (10) selon l'une quelconque des revendications 3 à 5, dans lequel le conducteur thermique (62) inclut une maille conductrice.

9. Panneau de plancher chauffé d'aéronef (10) selon l'une quelconque des revendications 3 à 8, dans lequel le conducteur thermique (62) comprend une pluralité d'ouvertures formant une zone ouverte.

10. Panneau de plancher chauffé d'aéronef (10) selon l'une quelconque des revendications précédentes, dans lequel le conducteur thermique (62) comporte approximativement quarante-cinq pourcent à approximativement soixante-et-un pourcent de zone ouverte.

11. Panneau de plancher chauffé d'aéronef (10) selon l'une quelconque des revendications 2 à 10, dans lequel la couche de distribution de chaleur (56) est collée à la couche de production de chaleur (54) avec un adhésif (58).

12. Panneau de plancher chauffé d'aéronef (10) selon l'une quelconque des revendications précédentes, dans lequel l'adhésif (58) est un adhésif durcissant à une température élevée.

13. Panneau de plancher chauffé d'aéronef (10) selon l'une quelconque des revendications 2 à 12, dans lequel la couche de distribution de chaleur (56) et la couche de production de chaleur (54) sont durcies ensemble.

14. Panneau de plancher chauffé d'aéronef (10) selon l'une quelconque des revendications 3 à 13, comprenant, en outre, un conducteur de mise à la masse électrique (64) connecté au conducteur thermique (62).

15. Panneau de plancher chauffé d'aéronef (10) selon l'une quelconque des revendications précédentes, dans lequel la couche de couverture de protection (16) comprend une couche de préimprégné en fibres de verre.

16. Panneau de plancher chauffé d'aéronef (110/210) selon la revendication 1, dans lequel la couche de couverture de protection (116/216) comprend une feuille à surface métallique.

17. Panneau de plancher chauffé d'aéronef (110/210) selon l'une quelconque des revendications précédentes, dans lequel la feuille à surface métallique (116/216) est constituée d'aluminium, de titane, d'acier ou d'acier inoxydable.

18. Panneau de plancher chauffé d'aéronef (110/210) selon l'une quelconque des revendications précédentes, dans lequel la couche de couverture de protection (116/216) comprend une feuille à surface d'aluminium fixée à l'étage de dispositif de chauffage (142/242) avec un adhésif (166/266).

19. Panneau de plancher chauffé d'aéronef (210) selon l'une quelconque des revendications 1 et 16 à 18 **caractérisé par** la couche de couverture de protection (216) fixée à l'étage de dispositif de chauffage (242) avec un adhésif se collant de manière élastique (266).

20. Panneau de plancher chauffé d'aéronef (210) selon l'une quelconque des revendications précédentes, dans lequel l'adhésif se collant de manière élastique (266) est un auto-adhésif.

21. Panneau de plancher chauffé d'aéronef (210) selon l'une quelconque des revendications précédentes, dans lequel l'auto-adhésif (266) est un auto-adhésif acrylique.

22. Panneau de plancher chauffé d'aéronef (10/110/210) selon l'une quelconque des revendications précédentes, dans lequel l'étage de support comprend une couche de nid d'abeilles prise en sandwich entre des couches de fibres.

23. Panneau de plancher chauffé d'aéronef (10/110/210) selon l'une quelconque des revendications précédentes, dans lequel l'étage de dispositif de chauffage (42/142/242) comprend un élément résistif (22) encapsulé dans les plis de matière plastique thermodurcie.

24. Panneau de plancher chauffé d'aéronef (10/110/210) selon l'une quelconque des revendications précédentes, comprenant, en outre, une couche d'adhésif durcissant à une température élevée (52/152/242) entre l'étage de support (40/140/240) et l'étage de dispositif de chauffage (42/142/242).

25. Procédé de fabrication du panneau de plancher chauffé d'aéronef (10/110/210) selon l'une quelconque des revendications précédentes, lequel procédé comprenant les étapes consistant à :
empiler une pluralité de couches durcissables ensemble pour former l'étage de support (40/140/240) et l'étage de dispositif de chauffage (42/142/242) ;
durcir les couches empilées pour former la structure composite (18/118/218).

26. Procédé selon la revendication 25, lorsque dépendant de la revendication 2, dans lequel ladite étape d'empilage comprend l'application d'un adhésif (58) à la couche de production de chaleur (54) et dispose la couche de distribution de chaleur (56) sur l'adhésif ; et dans lequel ladite étape de durcissement comprend le durcissement des couches de production de chaleur et de distribution de chaleur (54, 56) à une température de durcissement élevée.

27. Procédé selon la revendication 25 ou la revendication 26, dans lequel ladite étape de durcissement est exécutée à une température de durcissement élevée.

28. Procédé selon l'une quelconque des revendications 25 à 27, comprenant, en outre, l'étape consistant à fixer une feuille de couverture de protection (116/216) à l'étage de dispositif de chauffage (142/242) avec un adhésif (166/266).

29. Procédé selon la revendication 28, dans lequel ladite étape de fixation est effectuée dans une opération secondaire.

30. Procédé selon la revendication 28, dans lequel ladite étape de fixation comprend l'application d'une couche d'un adhésif élastique après collage (266) au-dessus de l'étage de dispositif de chauffage (242) et le placement de la couche de couverture de protection (216) au-dessus de la couche d'adhésif avant l'étape de durcissement et dans lequel ladite étape de durcissement comprend le durcissement des couches de support/dispositif de chauffage (240/242) et de la couche de couverture de protection (216) ensemble.

31. Procédé selon l'une quelconque des revendications 25 à 30, dans lequel la couche de couverture de protection (216) est une feuille métallique et dans lequel l'adhésif élastique après collage (266) permet à la feuille à surface métallique de se dilater et de se rétracter à un coefficient de dilatation thermique différent des couches de support/dispositif de chauffage (240, 242) pendant l'étape de durcissement et refroidissement ultérieur.

32. Procédé selon les revendications 30 ou 31, dans lequel la température de durcissement est au moins d'environ 121,11°C (250°F).

33. Procédé selon l'une quelconque des revendications 25 à 32, dans lequel la couche de l'auto-adhésif (266) est d'environ 0,254 cm (0,010 pouce) et dans lequel la température de durcissement est d'environ 137,78°C (280°F).

34. Procédé selon l'une quelconque des revendications 31, 32 et 33, dans lequel la feuille de revêtement est découpée en une forme de maille avant l'étape de durcissement.

35. Procédé selon l'une quelconque des revendications 31 à 34, dans lequel un traitement en surface est appliqué à la feuille de revêtement avant l'étape de durcissement.

36. En combinaison, un aéronef (12) et un panneau de plancher chauffé d'aéronef (10/110/210) selon l'une quelconque des revendications 1 à 24 ou comme fabriqués selon le procédé de l'une quelconque des revendications 25 à 35.
